# EUROPEAN PATENT APPLICATION

(11) **EP 4 451 750 A1**
(43) Date of publication of application: **23.10.2024**
(21) Application number: 22920087.8
(22) Date of filing: 29.12.2022
(51) Int. Cl.: H04W 52/14

(54) **COMMUNICATION METHOD AND APPARATUS**

(30) Priority: 11.01.2022 CN 202210029028
(71) Applicant: Huawei Technologies Co., Ltd., Shenzhen, Guangdong 518129 (CN)
(72) Inventor: DING, Yang, Shenzhen, Guangdong 518129 (CN); LI, Yuan, Shenzhen, Guangdong 518129 (CN); LI, Jun, Shenzhen, Guangdong 518129 (CN); GUAN, Lei, Shenzhen, Guangdong 518129 (CN); LI, Ruijie, Shenzhen, Guangdong 518129 (CN)
(74) Representative: Thun, Clemens
(86) International application number: PCT/CN2022/143217
(87) International publication number: WO 2023/134457

(57) **Abstract**

Embodiments of this application provide a communication method and apparatus. The method includes: A terminal device determines m uplink channels, where the m uplink channels include a first channel, the first channel includes high priority information and low priority information, the m uplink channels overlap in time domain, and a sum of powers of the m uplink channels is greater than a maximum transmit power of the terminal device; and the terminal device sends n uplink channels according to a first rule, where the n uplink channels belong to the m uplink channels, the first rule is a rule of a transmit power allocation order of an uplink channel, n is a positive integer less than or equal to m, and m is an integer greater than 1. In the method, a power allocation order during multiplexing of a cross-priority uplink channel (namely, the first channel) is defined, so that sending of high priority uplink control information can be ensured within the maximum transmit power allowed by the terminal device, thereby improving transmission performance of a system.

## Description

This application claims priority to Chinese Patent Application No. 202210029028.2, filed with the China National Intellectual Property Administration on January 11, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

With rapid development of wireless communication, a multi-carrier technology starts to be widely applied, and a throughput of a communication system is improved by expanding a frequency domain resource. When a terminal device simultaneously transmits uplink channels on a plurality of carriers, because powers of uplink transmission on different carriers in the plurality of carriers are separately calculated, a sum of transmit powers of uplink channels with different priorities may exceed a maximum transmit power of the terminal device at some moments. The terminal device needs to allocate transmit powers according to a specific rule, to ensure normal transmission of a service.

### SUMMARY

This application provides a communication method and apparatus, to determine a transmit power allocation order of an uplink channel that carries both high priority information and low priority information. This ensures sending of the high priority information and improves transmission reliability of a system.

According to a first aspect, a communication method is provided. The method may be performed by a terminal device, or may be performed by a chip or a circuit used in the terminal device. This is not limited in this application. For ease of description, the following uses an example in which the method is performed by the terminal device for description.

The method includes: The terminal device determines m uplink channels, where the m uplink channels include a first channel, the first channel includes high priority information and low priority information, the m uplink channels overlap in time domain, a sum of powers of the m uplink channels is greater than a maximum transmit power of the terminal device, and m is an integer greater than 1; and the terminal device sends n uplink channels according to a first rule, where the n uplink channels belong to the m uplink channels, the first rule is a rule of a transmit power allocation order of an uplink channel, and n is a positive integer less than or equal to m.

According to a second aspect, a communication method is provided. The method may be performed by a network device, or may be performed by a chip or a circuit used in the network device. This is not limited in this application. For ease of description, the following uses an example in which the method is performed by the network device for description.

The method includes: The network device receives n uplink channels, where the n uplink channels belong to m uplink channels, the m uplink channels include a first channel, the first channel includes high priority information and low priority information, the m uplink channels overlap in time domain, a sum of powers of the m uplink channels is greater than a maximum transmit power of a terminal device, the n uplink channels are determined according to a first rule, the first rule is a rule of a transmit power allocation order of an uplink channel, m is an integer greater than 1, and n is a positive integer less than or equal to m.

According to the solutions provided in this application, a rule (a rule of multiplexing of a cross-priority uplink channel) of a power allocation order of the first channel is defined, to ensure sending of high priority uplink control information within the maximum transmit power allowed by the terminal device, thereby improving transmission performance of a system.

With reference to the first aspect or the second aspect, in some implementations, the m uplink channels further include at least one of a second channel and a third channel, the second channel includes the high priority information but does not include the low priority information, and the third channel includes the low priority information but does not include the high priority information.

In the foregoing manner, the power allocation rule provided in this application not only includes the multiplexing of the cross-priority uplink channel, but also includes multiplexing of a high priority or low priority uplink channel.

With reference to the first aspect or the second aspect, in some implementations, the first channel includes at least one of the following channels: a fourth channel, a fifth channel, a sixth channel, and a seventh channel.

With reference to the first aspect or the second aspect, in some implementations, the fourth channel is the high priority information and the low priority information, where the high priority information includes a high priority (high priority, HP) physical uplink control channel (physical uplink control channel, PUCCH) or an HP physical uplink shared channel (physical uplink shared channel, PUSCH), and further includes at least one of an HP automatic repeat request-acknowledgement (hybrid automatic repeat request-acknowledgement, HARQ-ACK) or an HP scheduling request (scheduling request, SR), and the low priority information is at least one of a low priority (low priority, LP) HARQ-ACK and an LP SR.

With reference to the first aspect or the second aspect, in some implementations, the fourth channel is a PUCCH, and the fourth channel may be at least one of the following information: an HP PUCCH carrying the HP HARQ-ACK and the LP HARQ-ACK, an HP PUCCH carrying the HP SR and the LP HARQ-ACK, an HP PUCCH carrying the HP HARQ-ACK, the HP SR, and the LP HARQ-ACK, an HP PUCCH carrying the HP HARQ-ACK and the LP SR, an HP PUCCH carrying the HP SR and the LP SR, an HP PUCCH carrying the HP HARQ-ACK, the HP SR, and the LP SR, an HP PUCCH carrying the LP HARQ-ACK, the HP SR, and the LP SR, an HP PUCCH carrying the LP HARQ-ACK, the HP HARQ-ACK, and the LP SR, or an HP PUCCH carrying the HP HARQ-ACK, the LP HARQ-ACK, the HP SR, and the LP SR.

With reference to the first aspect or the second aspect, in some implementations, the fourth channel is a PUSCH, and the fourth channel may be at least one of the following information: an HP PUSCH carrying the HP HARQ-ACK and the LP HARQ-ACK, an HP PUSCH carrying the HP HARQ-ACK, the LP HARQ-ACK, and an LP channel state information (channel state information, CSI) part 1, an HP PUSCH carrying the HP HARQ-ACK, the LP HARQ-ACK, and an HP CSI part 1, an HP PUSCH carrying the HP HARQ-ACK and an LP CSI part 1, or an HP PUSCH carrying the HP HARQ-ACK, an LP CSI part 1, and an LP CSI part 2.

With reference to the first aspect or the second aspect, in some implementations, the fifth channel is the PUSCH, and the fifth channel may be at least one of the following information: an HP PUSCH carrying the LP HARQ-ACK, an HP PUSCH carrying the LP HARQ-ACK and the LP CSI part 1, or an HP PUSCH carrying the LP HARQ-ACK, the LP CSI part 1, and the LP CSI part 2.

With reference to the first aspect or the second aspect, in some implementations, the sixth channel is the PUSCH, and the sixth channel may be an HP PUSCH carrying the LP CSI part 1, or an HP PUSCH carrying the LP CSI part 1 and the LP CSI part 2.

With reference to the first aspect or the second aspect, in some implementations, the seventh channel is the PUSCH, and the seventh channel may be a low priority physical uplink data channel LP PUSCH carrying the HP HARQ-ACK, an LP PUSCH carrying the HP HARQ-ACK and the LP HARQ-ACK, an LP PUSCH carrying the HP HARQ-ACK, the LP HARQ-ACK, and the LP CSI part 1, an LP PUSCH carrying the HP HARQ-ACK and the LP CSI part 1, or an LP PUSCH carrying the HP HARQ-ACK, the LP CSI part 1, and the LP CSI part 2.

With reference to the first aspect or the second aspect, in some implementations, the first channel includes an eighth channel, and the eighth channel is an HP PUSCH carrying HP CSI and the LP HARQ-ACK.

With reference to the first aspect or the second aspect, in some implementations, the second channel is at least one of the following information: an HP PUCCH carrying the HP HARQ-ACK and/or the HP SR, an HP PUSCH carrying the HP HARQ-ACK, a PUSCH carrying the HP HARQ-ACK and the HP CSI, an HP PUSCH carrying the HP CSI, or an HP PUSCH.

With reference to the first aspect or the second aspect, in some implementations, the third channel is at least one of the following information: an LP PUCCH carrying the LP HARQ-ACK and/or the LP SR, an LP PUCCH carrying the LP HARQ-ACK and LP CSI, an LP PUCCH carrying the LP SR and the LP CSI, an LP PUCCH carrying the LP HARQ-ACK, the LP SR, and the LP CSI, an LP PUSCH carrying the LP HARQ-ACK, an LP PUSCH carrying the LP HARQ-ACK and the LP CSI, an LP PUCCH carrying the LP CSI, an LP PUSCH carrying the LP CSI, or an LP PUSCH.

With reference to the first aspect or the second aspect, in some implementations, the first rule includes: A transmit power allocation order of the fifth channel and/or a transmit power allocation order of the sixth channel are/is the same as a transmit power allocation order of the HP PUSCH.

In this implementation, a transmit power allocation order is defined for the first channel. This may ensure that transmission of the HP PUSCH and transmission of LP uplink control information (uplink control information, UCI) have a same priority.

With reference to the first aspect or the second aspect, in some implementations, the first rule includes: A transmit power allocation order of the fifth channel and/or a transmit power allocation order of the sixth channel are/is higher than a transmit power allocation order of the HP PUSCH, and are/is lower than a transmit power allocation order of the HP PUSCH carrying the HP CSI.

In this implementation, a transmit power allocation order is defined for the first channel. This may ensure transmission of the LP UCI.

With reference to the first aspect or the second aspect, in some implementations, the first rule includes: A transmit power allocation order of the fifth channel and/or a transmit power allocation order of the sixth channel are/is lower than a transmit power allocation order of the HP PUSCH, and are/is higher than the LP PUCCH carrying the LP HARQ-ACK and/or the LP SR.

In this implementation, a transmit power allocation order is defined for the first channel. Because reliability of the LP UCI is low, lowering a transmit power allocation order of the LP UCI can ensure that performance of the HP PUSCH is not affected.

With reference to the first aspect or the second aspect, in some implementations, the transmit power allocation order of the fifth channel is higher than the transmit power allocation order of the sixth channel.

In this implementation, a transmit power allocation order defined for the first channel. This ensures that LP HARQ-ACK information can be transmitted prior to LP CSI information.

With reference to the first aspect or the second aspect, in some implementations, the first rule includes: The transmit power allocation order of the fifth channel is the same as a transmit power allocation order of the HP PUSCH carrying the HP HARQ-ACK.

With reference to the first aspect or the second aspect, in some implementations, the first rule includes: The transmit power allocation order of the sixth channel is the same as the transmit power allocation order of the HP PUSCH.

In this implementation, a transmit power allocation order is defined for the first channel. This ensures that HARQ-ACK information and the high priority information can be preferentially transmitted.

With reference to the first aspect or the second aspect, in some implementations, the first rule includes: The transmit power allocation order of the fifth channel is the same as a transmit power allocation order of the HP PUSCH carrying the HP HARQ-ACK.

With reference to the first aspect or the second aspect, in some implementations, the first rule includes: The transmit power allocation order of the sixth channel is the same as the transmit power allocation order of the HP PUSCH carrying the HP CSI.

In this implementation, a transmit power allocation order is defined for the first channel. This ensures that HARQ-ACK information and the high priority information can be preferentially transmitted, and ensures that LP CSI information can be transmitted prior to the HP PUSCH, to protect measurement reporting and improve reliability of transmission of the uplink channels.

With reference to the first aspect or the second aspect, in some implementations, the first rule includes: The transmit power allocation order of the fifth channel is lower than a transmit power allocation order of the HP PUSCH carrying the HP HARQ-ACK, and is higher than the transmit power allocation order of the HP PUSCH carrying the HP CSI.

With reference to the first aspect or the second aspect, in some implementations, the first rule includes: The transmit power allocation order of the sixth channel is the same as the transmit power allocation order of the HP PUSCH.

In this implementation, a transmit power allocation order is defined for the first channel. This ensures that HARQ-ACK information and the high priority information can be preferentially transmitted.

With reference to the first aspect or the second aspect, in some implementations, the first rule includes: The transmit power allocation order of the fifth channel is lower than a power allocation order of the HP PUSCH carrying the HP HARQ-ACK, and is higher than the transmit power allocation order of the HP PUSCH carrying the HP CSI.

With reference to the first aspect or the second aspect, in some implementations, the first rule includes: The transmit power allocation order of the sixth channel is the same as the transmit power allocation order of the HP PUSCH carrying the HP CSI.

In this implementation, a transmit power allocation order is defined for the first channel. This ensures that HARQ-ACK information and the high priority information can be preferentially transmitted, and ensures that LP CSI information can be transmitted prior to the HP PUSCH, to protect measurement reporting and improve transmission reliability of a system.

With reference to the first aspect or the second aspect, in some implementations, the first rule further includes: A transmit power allocation order of the fourth channel and/or a transmit power allocation order of the seventh channel are/is the same as a transmit power allocation order of the HP PUSCH carrying the HP HARQ-ACK.

With reference to the first aspect or the second aspect, in some implementations, the first rule further includes: A transmit power allocation order of the eighth channel is the same as the transmit power allocation order of the HP PUSCH carrying the HP CSI.

With reference to the first aspect or the second aspect, in some implementations, the first rule further includes: The transmit power allocation order of the eighth channel is the same as the transmit power allocation order of the fifth channel and/or the transmit power allocation order of the sixth channel.

In this implementation, a transmit power allocation order is defined for the first channel. This ensures that the high priority information is preferentially transmitted.

With reference to the first aspect or the second aspect, in some implementations, the first rule includes: A transmit power allocation order of the first channel is lower than a transmit power allocation order of the second channel, and is higher than a transmit power allocation order of the third channel.

In this implementation, a transmit power allocation order is defined for the first channel. Different reliability of different priorities is considered, to ensure that the HP HARQ-ACK is preferentially transmitted.

With reference to the first aspect or the second aspect, in some implementations, transmit power allocation orders of at least two of the fourth channel, the fifth channel, the sixth channel, the seventh channel, and the eighth channel are the same.

In this implementation, a transmit power allocation order is defined for the first channel. A definition rule is convenient and concise, and different reliability of different priorities is considered.

With reference to the first aspect or the second aspect, in some implementations, transmit power allocation orders of at least two of the fifth channel, the sixth channel, the seventh channel, and the eighth channel are the same, and are lower than a transmit power allocation order of the fourth channel.

In this implementation, a transmit power allocation order is defined for the first channel. A definition rule is convenient and concise, and different reliability of different priorities is considered, to ensure that the HP HARQ-ACK is preferentially transmitted.

With reference to the first aspect or the second aspect, in some implementations, the transmit power allocation order of the fourth channel is the same as the transmit power allocation order of the seventh channel.

With reference to the first aspect or the second aspect, in some implementations, transmit power allocation orders of at least two of the fifth channel, the sixth channel, and the eighth channel are the same.

With reference to the first aspect or the second aspect, in some implementations, the transmit power allocation order of the fourth channel and/or the transmit power allocation order of the seventh channel are/is higher than a transmit power allocation order of at least one of the fifth channel, the sixth channel, and the eighth channel.

In this implementation, a transmit power allocation order is defined for the first channel. A definition rule is convenient and concise, and different reliability of different priorities is considered, to ensure that the HP HARQ-ACK is preferentially transmitted.

With reference to the first aspect or the second aspect, in some implementations, the transmit power allocation order of the fourth channel is the same as the transmit power allocation order of the seventh channel.

With reference to the first aspect or the second aspect, in some implementations, the transmit power allocation order of the fifth channel is the same as the transmit power allocation order of the sixth channel.

With reference to the first aspect or the second aspect, in some implementations, a transmit power allocation order of the eighth channel is lower than the transmit power allocation order of the fourth channel and/or the transmit power allocation order of the seventh channel, and is higher than the transmit power allocation order of the fifth channel and/or the transmit power allocation order of the sixth channel.

In this implementation, a transmit power allocation order is defined for the first channel. A definition rule is convenient and concise, and different reliability of different priorities is considered, to ensure that HP UCI is preferentially transmitted.

With reference to the first aspect or the second aspect, in some implementations, the first rule is specified in a protocol.

For example, in embodiments of this application, uplink control information UCI may include at least one of the following information: a HARQ-ACK/NACK message, a scheduling request SR message, and channel state information CSI.

According to a third aspect, a communication apparatus is provided, and includes: a processing unit, configured to determine, by a terminal device, m uplink channels, where the m uplink channels include a first channel, the first channel includes high priority information and low priority information, the m uplink channels overlap in time domain, a sum of powers of the m uplink channels is greater than a maximum transmit power of a terminal device, and m is an integer greater than 1; and a transceiver unit, configured to send, by a terminal device, n uplink channels according to a first rule, where the n uplink channels belong to the m uplink channels, the first rule is a rule of a transmit power allocation order of an uplink channel, and n is a positive integer less than or equal to m.

For some optional implementations of the third aspect, refer to the descriptions of the first aspect.

According to a fourth aspect, a communication apparatus is provided, and includes: a transceiver unit, configured to receive, by a network device, n uplink channels, where the n uplink channels belong to m uplink channels, the m uplink channels include a first channel, the first channel includes high priority information and low priority information, the m uplink channels overlap in time domain, a sum of powers of the m uplink channels is greater than a maximum transmit power of a terminal device, the n uplink channels are determined according to a first rule, the first rule is a rule of a transmit power allocation order of an uplink channel, m is an integer greater than 1, and n is a positive integer less than or equal to m.

For some optional implementations of the fourth aspect, refer to the descriptions of the second aspect.

According to a fifth aspect, a terminal device is provided. The terminal device includes a processor, and optionally, further includes a memory. The processor is configured to control a transceiver to receive and send a signal. The memory is configured to store a computer program. The processor is configured to invoke the computer program from the memory and run the computer program, to enable the terminal device to perform the method according to any one of the first aspect or the possible implementations of the first aspect.

Optionally, there are one or more processors, and there are one or more memories.

Optionally, the memory may be integrated with the processor, or the memory and the processor are separately disposed.

Optionally, the terminal device further includes the transceiver. The transceiver may be specifically a transmitting machine (transmitter) and a receiving machine (receiver).

According to a sixth aspect, a network device is provided. The network device includes a processor, and optionally, further includes a memory. The processor is configured to control a transceiver to receive and send a signal. The memory is configured to store a computer program. The processor is configured to invoke the computer program from the memory and run the computer program, to enable the network device to perform the method according to any one of the second aspect or the possible implementations of the second aspect.

Optionally, there are one or more processors, and there are one or more memories.

Optionally, the memory may be integrated with the processor, or the memory and the processor are separately disposed.

Optionally, the network device further includes the transceiver. The transceiver may be specifically a transmitting machine (transmitter) and a receiving machine (receiver).

According to a seventh aspect, a communication system is provided, and includes: a terminal device, configured to perform the method according to any one of the first aspect or the possible implementations of the first aspect; and a network device, configured to perform the method according to any one of the second aspect or the possible implementations of the second aspect.

According to an eighth aspect, a computer-readable storage medium is provided. The computer-readable storage medium stores a computer program or code. When the computer program or the code is run on a computer, the computer is enabled to perform the method according to any one of the first aspect or the possible implementations of the first aspect, or the computer is enabled to perform the method according to any one of the second aspect or the possible implementations of the second aspect.

According to a ninth aspect, a chip is provided, and includes at least one processor, where the at least one processor is coupled to a memory, the memory is configured to store a computer program, and the processor is configured to invoke the computer program from the memory and run the computer program, to enable a terminal device in which a chip system is mounted to perform the method according to any one of the first aspect or the possible implementations of the first aspect, and to enable a network device in which a chip system is mounted to perform the method according to any one of the second aspect or the possible implementations of the second aspect.

The chip may include an input circuit or interface configured to send information or data, and an output circuit or interface configured to receive information or data.

According to a tenth aspect, a computer program product is provided. The computer program product includes computer program code. When the computer program code is run by a terminal device, the terminal device is enabled to perform the method according to any one of the first aspect or the possible implementations of the first aspect, and when the computer program code is run by a network device, the network device is enabled to perform the method according to any one of the second aspect or the possible implementations of the second aspect.

### BRIEF DESCRIPTION OF DRAWINGS

FIG. 1 is a diagram of an example of a communication system applicable to this application;
FIG. 2 is a diagram of an example of a communication method applicable to this application;
FIG. 3 is a diagram of an example of a communication apparatus applicable to this application; and
FIG. 4 is a diagram of another example of a communication apparatus applicable to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a worldwide interoperability for microwave access (worldwide interoperability for microwave access, WiMAX) communication system, and a 5th generation (5th generation, 5G) communication system or a future communication system, for example, a 6th generation (6th generation, 6G) communication system, and vehicle-to-everything (vehicle-to-x, V2X), where the V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V) for workshop communication, internet of vehicles, machine type communication (machine type communication, MTC), internet of things (internet of things, IoT), long term evolution-machine (long term evolution-machine, LTE-M), and machine-to-machine (machine-to-machine, M2M).

The technical solutions provided in this application may be further applied to a future communication system, for example, a 6th generation mobile communication system. This is not limited in this application.

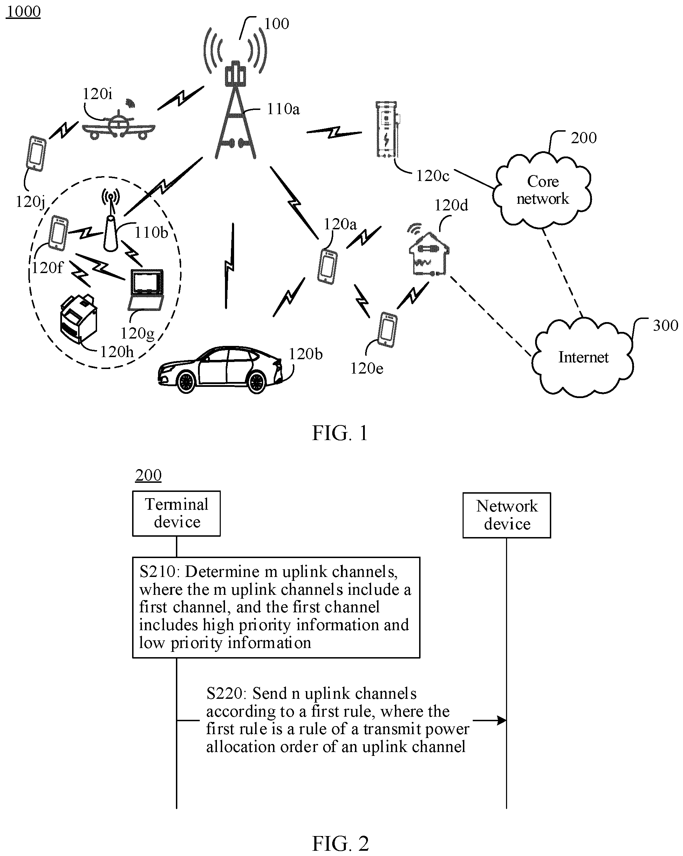

For ease of understanding of embodiments of this application, a communication system applicable to embodiments of this application is first described in detail with reference to FIG. 1. FIG. 1 is a diagram of an architecture of a communication system 1000 that may be applied to an embodiment of this application. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or a function of the core network device and a logical function of the radio access network device may be integrated into a same physical device, or some functions of the core network device and some functions of the radio access network device may be integrated into one physical device. A wired or wireless manner may be used for a connection between terminals and a connection between radio access network devices.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) that are of the base station, and may further complete a function of a service data adaptation protocol (service data adaptation protocol, SDAP). The DU completes functions of a radio link control layer and a media access control (media access control, MAC) layer that are of the base station, and may further complete a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, descriptions are provided below by using an example in which a base station serves as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, remote medical, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on land, including an indoor or outdoor scenario, and a handheld or a vehicle-mounted scenario; or may be deployed on water; or may be deployed on an airplane, a balloon, and a man-made satellite in the air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For the terminal 120j that accesses the radio access network 100 through 120i, the terminal 120i is a base station; while for the base station 110a, 120i is a terminal. In other words, 110a and 120i communicate with each other based on a radio air interface protocol. Certainly, 110a and 120i may alternatively communicate with each other based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on both the spectrum below 6 GHz and the spectrum above 6 GHz. A spectrum resource used for wireless communication is not limited in embodiments of this application.

In embodiments of this application, a base station function may be performed by a module (for example, a chip) in the base station, or may be performed by a control subsystem including a base station function. The control subsystem that includes the base station function herein may be a control center in an application scenario of the foregoing terminal, for example, the smart grid, industrial control, smart transportation, and the smart city. The terminal function may be performed by a module (for example, a chip or a modem) in the terminal, or may be performed by an apparatus including the terminal function.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered by a signal from a neighboring cell.

For ease of understanding embodiments of this application, the following uses the terminal device and the network device as examples for description. This is not specifically limited in this application.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely used as examples of a downlink data channel, a downlink control channel, an uplink control channel, and an uplink data channel. In different systems and different scenarios, a data channel and a control channel may have different names. This is not specifically limited in this application.

It should be understood that, FIG. 1 is merely a simplified diagram of an example communication system for ease of understanding, and should not constitute any limitation on the technical solutions of this application. The communication system 1000 may further include another network device, for example, a wireless relay device or a wireless backhaul device. Similarly, the system may also include more terminal devices. Quantities of network devices and terminal devices included in the communication system are not limited in embodiments of this application. It should be further understood that, the system may also be referred to as a network. This is not limited in this application.

For ease of understanding of embodiments of this application, some terms in this application are first briefly described.

### 1. Time unit

In embodiments of this application, data and/or signaling may be carried on a time-frequency resource. The time-frequency resource may include a resource in time domain and a resource in frequency domain. A time domain resource may include one or more time units (or may also be referred to as a time domain unit).

The time unit may be of various granularities. One time unit may be one symbol (symbol), one mini-slot (mini-slot), one slot (slot), one subframe (subframe), or the like. A time length of one frame is 10 milliseconds (ms), including 10 subframes. That is, a time length corresponding to each subframe is 1 ms. One slot includes seven or 14 symbols, and one mini-slot may include at least one symbol (for example, two symbols, seven symbols, or 14 symbols, or any quantity of symbols less than or equal to 14 symbols).

The time unit may be a physical time unit, a physical time unit used for transmission, an available time unit (available, a time unit that can be used for transmission), an available time unit used for transmission, or a time unit actually used for transmission (namely, a time unit actually used for transmission).

### 2. Transmit power

In embodiments of this application, a maximum transmit power of a terminal device is a maximum uplink transmit power that can be used by the terminal device. A minimum transmit power is a minimum uplink transmit power that needs to be used by the terminal device. The terminal device may obtain a transmit power of an uplink channel through calculation according to a predefined power calculation rule. For details, refer to the protocol standard 3GPP 38.213. Details are not described herein again.

### 3 Uplink control information UCI

The UCI includes an automatic repeat request HARQ acknowledgment ACK/negative acknowledgment (negative acknowledgement, NACK) message, channel state information CSI, a scheduling request SR message, and the like.

The UCI may be transmitted on a PUCCH, or may be transmitted on a PUSCH. When being transmitted on the PUSCH, the UCI may be transmitted separately, or may be transmitted together with data. To ensure a feature of an uplink single carrier, the PUCCH and PUSCH cannot be separately transmitted when time domain resources overlap. Therefore, the UCI carried on the PUCCH needs to be transmitted on the PUSCH.

### 4. Multiplexing of a cross-priority uplink channel

Multiplexing of an uplink channel means that information originally carried on two uplink channels is transmitted through a same uplink channel.

In this application, the multiplexing of the cross-priority uplink channel may be understood as sending information with different priorities through one uplink channel. For example, the multiplexing of the cross-priority uplink channel includes multiplexing of high priority HP UCI and low priority LP UCI, may further include multiplexing of the HP UCI on an LP PUSCH, and may further include scenarios such as the multiplexing of the LP UCI on an HP PUSCH.

Because different information may correspond to different services, the multiplexing of the cross-priority uplink channel in this application may also be understood as multiplexing of a cross-priority service.

### 5. PUSCH and PUCCH

The PUSCH may be used to carry uplink data or UCI. The PUCCH may be used to carry the UCI. Therefore, the PUSCH is also understood as a channel carrying uplink data information or the UCI, and the PUCCH may be understood as a channel carrying the UCI.

A high priority PUSCH may be used to carry high priority UCI. Similarly, a low priority PUSCH may be used to carry low priority UCI. A priority of the PUCCH is determined based on a priority and a type of the UCI carried on the PUCCH.

Optionally, regardless of whether the PUSCH carries the UCI or data, the PUSCH may also have a priority, which is determined based on a priority indication field in downlink control information. That is, the HP PUSCH may not carry any UCI or data. The LP PUSCH may either not carry any UCI or data. In other words, the HP PUSCH in embodiments of this application may be understood as an HP PUSCH carrying HP uplink data, or an HP PUSCH that carries neither the UCI nor the uplink data. The LP PUSCH in embodiments of this application may be understood as an LP PUSCH carrying LP uplink data, or an LP PUSCH that carries neither the UCI nor the uplink data.

With rapid development of wireless communication, a 5G communication system has improved in terms of a transmission rate, a latency, power consumption, and the like. In the international telecommunication union (international telecommunication union, ITU), enhanced mobile broadband (enhanced mobile broadband, eMBB), massive machine type communication (massive machine type communication, mMTC), and ultra-reliable and low-latency communication (ultra-reliable and low-latency communication, URLLC) are defined as three typical 5G services.

As one of the three typical 5G services, the URLLC is mainly applied to scenarios including unmanned driving, telemedicine, and the like. These application scenarios impose stricter requirements on reliability and a transmission latency. Specifically, a service requirement of the URLLC includes: Data transmission reliability reaches 99.999%, a transmission latency is less than 1 ms, and signaling overheads are reduced as much as possible when requirements for high reliability and a low latency are met.

In the Release 16 (R16) protocol, for two services including the eMBB and the URLLC, a case in which the URLLC service has a high priority and the eMBB service has a low priority is defined. In addition, when a time domain conflict occurs in transmission (for example, UCI transmission or data transmission) of a high priority service and a low priority service, the low priority LP service may be discarded, so that transmission of the high priority HP service is not affected.

Currently, the terminal device may simultaneously transmit the PUCCH, the PUSCH, a physical random access channel (physical random access channel, PRACH), a channel sounding uplink reference signal (sounding reference symbol, SRS), and the like on a plurality of carriers. Because powers for sending these signals are separately calculated, a sum of transmit powers of these signals may exceed a maximum transmit power of the terminal device. When a sum of transmit powers of signals transmitted by the terminal device on the plurality of carriers exceeds the maximum transmit power of the terminal device, the terminal device may sequentially allocate transmit powers to these signals according to a sorting rule of high and low priorities, to ensure that more signals and more important signals are transmitted as much as possible within the maximum transmit power of the terminal device.

A sorting rule of transmit power allocation orders is as follows:
(1) transmission of the PRACH in a primary cell (primary cell, PCell);
(2) transmission of a PUCCH or a PUSCH with a high priority index; and
(3) transmission of a PUCCH or a PUSCH with a same priority index:
   (a) transmission of a PUCCH including a HARQ-ACK and/or an SR and/or a link recovery request (link recovery request, LRR), or transmission of a PUSCH including a HARQ-ACK;
   (b) transmission of a PUCCH including the CSI, or transmission of a PUSCH including the CSI; and
   (c) transmission of a PUSCH that does not include the HARQ-ACK or the CSI, and transmission of a PUSCH on the PCell in a type-2 random access process.

According to different service trigger manners, random access may be classified into contention-based random access and non-contention-based random access. The type-2 random access process is the contention-based random access.

It should be understood that, a priority of the HARQ-ACK may be indicated by a priority index field during scheduling of downlink control information (downlink control information, DCI), or may be configured by using radio resource control (radio resource control, RRC) signaling during semi-persistent scheduling. A priority of the SR and a priority of the CSI may be configured by using RRC signaling. A priority of aperiodic CSI may be indicated by DCI for scheduling the aperiodic CSI.

In addition, a priority of the PUCCH may be determined based on a priority of the UCI carried on the PUCCH. This is because an uplink control channel is determined based on a size and a type of UCI carried on the uplink control channel. A priority of the PUSCH may be indicated by DCI for scheduling the PUSCH. For example, a priority index field in the DCI indicates the priority of the PUSCH scheduled based on the DCI.

Optionally, the PUSCH is used for sending of the carried uplink data or sending of the aperiodic CSI, and sending of the two signals may also be determined based on the DCI for scheduling the PUSCH.

However, in a possible multiplexing manner of an uplink channel, one uplink channel carries both high priority information and low priority information. In other words, possible multiplexing of the uplink channel is the multiplexing of the cross-priority uplink channel. For a power allocation order of an uplink channel (including the PUCCH and/or the PUSCH) multiplexed based on cross-priority UCI, if a transmit power allocation order is determined based only on a priority of the uplink channel, not all uplink transmission scenarios can be adapted. In this case, it cannot be ensured that the high priority UCI can be transmitted in a timely manner. This affects a transmission delay of the uplink channel and reliability of system performance.

In view of this, this application provides a communication method and apparatus, to determine a transmit power allocation order of an uplink channel multiplexed by a cross-priority channel. This ensures sending of the high priority information, and improves reliability of transmission of the uplink channel.

For ease of understanding embodiments of this application, the following points are further described.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In embodiments of this application, "at least one" means one or more, and " a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" generally represents an "or" relationship between associated objects.

In embodiments of this application, "first", "second", and various numbers are merely used for differentiation for ease of description, and are not used to limit the scope of embodiments of this application. For example, the terms are used to differentiate between different indication information.

In embodiments of this application, "protocol definition" may be implemented by pre-storing corresponding code or a corresponding table in a device (for example, a terminal device or a network device) or in another manner that can indicate related information. A specific implementation of "protocol definition" is not limited in this application. A "protocol" in embodiments of this application may be a standard protocol in the communication field, for example, may include an LTE protocol, an NR protocol, and a related protocol applied to a future communication system. This is not limited in this application.

In embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

In embodiments of this application, "communication" may be referred to as "wireless communication". "Communication" may also be described as "data transmission", "information transmission", "data processing", or the like. "Transmission" includes "receiving" and "sending". This is not specifically limited in this application.

In embodiments of this application, "indicate" may include "directly indicate" and "indirectly indicate". When a piece of indication information indicates A, the indication information may directly indicate A or indirectly indicate A, but it does not indicate that the indication information definitely carries A.

In addition, specific indication manners may also be various existing indication manners, for example, but not limited to, the foregoing indication manners and various combinations thereof. The indication manner is not limited in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of the sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may be, for example, but is not limited to, one or a combination of at least two of radio resource control signaling, media access control (media access control, MAC) layer signaling, and physical layer signaling.

The following describes in detail the communication method in embodiments of this application with reference to the accompanying drawings.

FIG. 2 is a schematic flowchart of a communication method 200 according to an embodiment of this application. The following specific implementation steps are included.

S210: A terminal device determines m uplink channels.

The m uplink channels include a first channel, the first channel includes high priority information and low priority information, the m uplink channels overlap in time domain, a sum of powers of the m uplink channels is greater than a maximum transmit power of the terminal device, and m is an integer greater than 1.

For example, the first channel may be a physical uplink control channel PUCCH or a physical uplink shared channel PUSCH. Information carried on a high priority PUCCH (HP PUCCH) may be high priority uplink control information, and information carried on a low priority (LP) PUCCH may be low priority uplink control information. Information carried on an HP PUSCH may be the HP UCI or HP data. Information carried on an LP PUSCH may be the LP UCI or LP data.

For example, uplink control information UCI may include supporting types including a HARQ-ACK/NACK message, a scheduling request SR message, channel state information CSI, and the like. CSI sent by the terminal device may also be referred to as a CSI report. The CSI report may include related information such as a channel quality indicator, a precoding matrix indicator, a CSI resource indicator, a rank indicator, and/or a beam.

Specifically, that the m uplink channels overlap in time domain should be understood as follows: A configuration of each of the m uplink channels includes a same time domain resource, or each of the m uplink channels is configured for transmission on the same time domain resource. The same time domain resource may be one or more time units, for example, may be one or more symbols or one or more slots.

Specifically, one transmit power is independently calculated for each of the m uplink channels. That the sum of the powers of the m uplink channels is greater than the maximum transmit power of the terminal device should be understood as follows: The sum of the transmit powers of the m uplink channels is greater than the maximum transmit power of the terminal device on one symbol on the overlapped time domain resource.

Specifically, the CSI report includes a CSI part 1 and a CSI part 2, and the CSI part 1 includes wideband reported information of a 1st transport block. The CSI part 2 includes wideband information and narrowband information of a 2nd transport block. The CSI report may include only the CSI part 1. The CSI in embodiments of this application may be understood as the CSI part 1 in some cases.

It should be noted that, the UCI may be transmitted on the PUCCH, or may be transmitted on the PUSCH. When being transmitted on the PUSCH, the UCI may be transmitted separately, or may be transmitted together with data.

In embodiments of this application, a priority may be understood as a physical layer priority. Generally, the priority includes a high priority and a low priority. For example, different values of one bit field indicate different priorities, and the different values may also be understood as indexes of the different priorities. An example in which the bit field is one bit is used. When a value of the bit is 0, a first priority is indicated, and the first priority should be understood as the low priority. When a value of the bit is 1, a second priority is indicated, and the second priority should be understood as the high priority.

For example, the first channel may include at least one of the following channels: a fourth channel, a fifth channel, a sixth channel, and a seventh channel.

The fourth channel is at least one of the following information:
A1: HP PUCCH carrying an HP HARQ-ACK and/or an HP SR, and an LP HARQ-ACK and/or an LP SR

In other words, in the case of A1, the fourth channel includes high priority information and low priority information, where the high priority information includes the HP PUCCH or the HP PUSCH, and further includes at least one of the HP HARQ-ACK or the HP SR, and the low priority information is at least one of the LP HARQ-ACK and the LP SR.

For example, the fourth channel is the PUCCH, and the fourth channel may be at least one of the following information: an HP PUCCH carrying the HP HARQ-ACK and the LP HARQ-ACK, an HP PUCCH carrying the HP SR and the LP HARQ-ACK, an HP PUCCH carrying the HP HARQ-ACK, the HP SR, and the LP HARQ-ACK, an HP PUCCH carrying the HP HARQ-ACK and the LP SR, an HP PUCCH carrying the HP SR and the LP SR, an HP PUCCH carrying the HP HARQ-ACK, the HP SR, and the LP SR, an HP PUCCH carrying the LP HARQ-ACK, the HP SR, and the LP SR, an HP PUCCH carrying the LP HARQ-ACK, the HP HARQ-ACK, and the LP SR, or an HP PUCCH carrying the HP HARQ-ACK, the LP HARQ-ACK, the HP SR, and the LP SR.

A2: HP PUSCH carrying the HP HARQ-ACK and the LP HARQ-ACK

A priority of the HP PUSCH may be determined based on DCI for scheduling the PUSCH.

A3: HP PUSCH carrying the HP HARQ-ACK, the LP HARQ-ACK, and an LP CSI part 1

A priority of the HP PUSCH may be determined based on DCI for scheduling the PUSCH.

A4: HP PUSCH carrying the HP HARQ-ACK, the LP HARQ-ACK, and a high priority channel state information HP CSI part 1

A priority of the HP PUSCH is determined based on DCI for scheduling HP CSI, and the DCI is also for scheduling the PUSCH.

A5: HP PUSCH carrying the HP HARQ-ACK and the LP CSI part 1, or an HP PUSCH carrying the HP HARQ-ACK, the LP CSI part 1, and an LP CSI part 2

A priority of the HP PUSCH may be determined based on DCI for scheduling the PUSCH.

The fifth channel is at least one of the following information: C1: HP PUSCH carrying the LP HARQ-ACK

A priority of the HP PUSCH is determined based on DCI for scheduling the PUSCH.

C2: HP PUSCH carrying the LP HARQ-ACK and the LP CSI part 1, or an HP PUSCH carrying the LP HARQ-ACK, the LP CSI part 1, and the LP CSI part 2

A priority of the HP PUSCH is determined based on DCI for scheduling the PUSCH.

The sixth channel is:
D1: HP PUSCH carrying the LP CSI part 1, or an HP PUSCH carrying the LP CSI part 1 and the LP CSI part 2

A priority of the HP PUSCH is determined based on DCI for scheduling the PUSCH.

The seventh channel is at least one of the following information: A6: LP PUSCH carrying the HP HARQ-ACK

A priority of the PUSCH is determined based on DCI for scheduling the PUSCH.

A7: LP PUSCH carrying the HP HARQ-ACK and the LP HARQ-ACK

A priority of the PUSCH is determined based on DCI for scheduling the PUSCH.

A8: LP PUSCH carrying the HP HARQ-ACK, the LP HARQ-ACK, and the LP CSI part 1

A priority of the LP PUSCH is determined based on DCI for scheduling the PUSCH.

A9: LP PUSCH carrying the HP HARQ-ACK and the LP CSI part 1, or an LP PUSCH carrying the HP HARQ-ACK, the LP CSI part 1, and the LP CSI part 2

A priority of the LP PUSCH is determined based on DCI for scheduling the PUSCH.

For example, the first channel may further include an eighth channel.

The eighth channel is: B1: HP PUSCH carrying the HP CSI and the LP HARQ-ACK

A priority of the HP PUSCH is determined based on the DCI for scheduling the HP CSI, and the DCI is also for scheduling the PUSCH.

Optionally, the m uplink channels further include at least one of a second channel and a third channel.

The second channel includes the high priority information but does not include the low priority information, and the third channel includes the low priority information but does not include the high priority information.

For example, the second channel may be at least one of the following information:
H1: HP PUCCH carrying the HP HARQ-ACK and/or the HP SR

A priority of the HP PUCCH is determined based on the carried HP UCI.

H2: HP PUSCH carrying the HP HARQ-ACK

A priority of the HP PUSCH is determined based on a priority field indicated by DCI for scheduling the PUSCH rather than by the HP HARQ-ACK.

H3: PUSCH carrying the HP HARQ-ACK and the HP CSI

A priority of the PUSCH is determined based on a priority field of the DCI for scheduling the HP CSI.

Optionally, the HP CSI may be the HP CSI part 1, or the HP CSI part 1 and an HP CSI part 2. This is not specifically limited in this application.

H4: HP PUSCH carrying the HP CSI

A priority of the PUSCH is related to the HP CSI and is determined based on the priority field indicated by the DCI for scheduling the HP CSI.

Optionally, the HP CSI may be the HP CSI part 1, or the HP CSI part 1 and the HP CSI part 2. This is not specifically limited in this application.

H5: HP PUSCH

Optionally, the HP PUSCH may carry uplink data.

A priority of the HP PUSCH is determined based on a priority field indicated by DCI for scheduling the PUSCH. Because H5 does not carry the HP UCI, H5 may also be denoted as an HP PUSCH only.

It should be understood that, the HP PUSCH may be further understood as an HP PUSCH that does not carry the HP UCI, or an HP PUSCH that does not carry any UCI information or uplink data information.

For example, the third channel may be at least one of the following information:
L1: LP PUCCH carrying the LP HARQ-ACK and/or the LP SR

A priority of the LP PUCCH is determined based on the carried LP UCI.

L2: LP PUCCH carrying the LP HARQ-ACK and LP CSI, an LP PUCCH carrying the LP SR and the LP CSI, or an LP PUCCH carrying the LP HARQ-ACK, the LP SR, and the LP CSI

A priority of the LP PUCCH is determined based on the carried LP UCI.

Optionally, the LP CSI may be the LP CSI part 1, or the LP CSI part 1 and the LP CSI part 2. This is not specifically limited in this application.

L3: LP PUSCH carrying the LP HARQ-ACK

A priority of the PUSCH is determined based on a priority field of DCI for scheduling the PUSCH.

L4: LP PUSCH carrying the LP HARQ-ACK and the LP CSI

A priority of the PUSCH is determined based on a priority field of DCI for scheduling the PUSCH, and is unrelated to the carried LP CSI. Optionally, the LP CSI may be the LP CSI part 1, or the LP CSI part 1 and the LP CSI part 2. This is not specifically limited in this application.

L5: LP PUCCH carrying the LP CSI

A priority of the PUCCH is determined based on a priority of the CSI.

Optionally, the LP CSI may be the LP CSI part 1, or the LP CSI part 1 and the LP CSI part 2. This is not specifically limited in this application.

L6: LP PUSCH carrying the LP CSI

A priority of the PUSCH is unrelated to the LP CSI, and is determined based on an indication of one DCI field.

Optionally, the LP CSI may be the LP CSI part 1, or the LP CSI part 1 and the LP CSI part 2. This is not specifically limited in this application.

L7: LP PUSCH

Optionally, the LP PUSCH carries the uplink data.

A priority of the LP PUSCH is determined by scheduling the DCI. Because L7 does not carry the LP UCI, L7 may also be denoted as an LP PUSCH only.

It should be understood that, the LP PUSCH may be further understood as an LP PUSCH that does not carry the LP UCI, or an HP PUSCH that does not carry any UCI information or uplink data information.

S220: The terminal device sends n uplink channels to a network device according to a first rule.

Correspondingly, the network device receives the n uplink channels from the terminal device.

The n uplink channels belong to the m uplink channels, the first rule is a rule of a transmit power allocation order of an uplink channel, and n is an integer greater than or equal to 1 and less than or equal to m.

Optionally, the first rule is specified in a protocol.

A power reduction order (prioritization of transmission power reduction) may also be referred to as a power allocation order. This is not specifically limited in this application.

In a possible implementation, for the second channel and the third channel, transmit power allocation orders are as follows:
level 1: H1, H2, and H3;
level 2: H4;
level 3: H5;
level 4: L1, L2, L3, and L4;
level 5: L5 and L6; and
level 6: L7.

In other words, power allocation orders of H1, H2, and H3 are the same. The power allocation orders of H1, H2, and H3 are higher than that of H4. The power allocation order of H4 is higher than that of H5. Power allocation orders of L1, L2, L3, and L4 are the same. The power allocation order of H5 is higher than that of L1, L2, L3, and L4. Power allocation orders of L5 and L6 are the same. The power allocation orders of L1, L2, L3, and L4 are higher than that of L5 and L6. The power allocation orders of L5 and L6 are higher than that of L7.

This implementation provides an implementation of the power allocation orders of the second channel and the third channel. Based on this, some possible implementations of a power allocation order of the first channel are provided below.

It should be noted that, in embodiments of this application, the transmit power allocation order may be understood as follows: The terminal device starts to allocate transmit powers from the level 1. If there is still an uplink channel to which no transmit power is allocated after the terminal device allocates all the transmit powers, the terminal device does not transmit the uplink channel to which no power is allocated. For example, an uplink power of the terminal device may be used to send just first n of the m uplink channels, or a remaining power of the terminal device is not sufficient enough to allow sending of a complete (n+1)^{th} uplink channel. In this case, the terminal device may normally send the first n uplink channels, and the (n+1)^{th} channel to an m^{th} channel are not sent.

Manner 1: The first rule includes at least one of the following:
A transmit power allocation order of the fifth channel and/or a transmit power allocation order of the sixth channel is the same as a transmit power allocation order of the HP PUSCH, a transmit power allocation order of the fourth channel and/or a transmit power allocation order of the seventh channel are/is the same as a transmit power allocation order of the HP PUSCH carrying the HP HARQ-ACK, or a transmit power allocation order of the eighth channel is the same as a transmit power allocation order of the HP PUSCH carrying the HP CSI.

For example, the maximum transmit power of the terminal device is 23 dBm, and it is determined that there are five (that is, m=5) to-be-transmitted uplink channels: the LP PUCCH carrying the LP HARQ-ACK, the second channel, the fourth channel, the LP PUSCH, and the LP PUSCH carrying the LP CSI. Powers at which the terminal device sends the five uplink channels are respectively 3 dBm, 8 dBm, 5 dBm, 10 dBm, and 6 dBm. It is clear that a sum of transmit powers of the five uplink channels exceeds the maximum transmit power of the terminal device. It may be determined, according to the first rule, that transmit power allocation orders of the five uplink channels respectively correspond to the level 4, the level 3, the level 1, the level 6, and the level 5. In this case, the terminal device may simultaneously send, by using 22 dBm, the four uplink channels: the LP PUCCH of the LP HARQ-ACK, the second channel, the fourth channel, and the LP PUSCH carrying the LP CSI, but the LP PUSCH cannot be normally transmitted.

In this implementation, the transmit power allocation order is defined for the first channel. This ensures that transmission of the HP PUSCH and transmission of the LP UCI have a same priority, and also ensures that the high priority information is preferentially transmitted.

Manner 2: The first rule includes at least one of the following:
A transmit power allocation order of the fifth channel, a transmit power allocation order of the sixth channel, and a transmit power allocation order of the eighth channel are the same as a transmit power allocation order of the HP PUSCH, and a transmit power allocation order of the fourth channel and/or a transmit power allocation order of the seventh channel are/is the same as a transmit power allocation order of the HP PUSCH carrying the HP HARQ-ACK.

In this implementation, defining the transmit power allocation order for the first channel can ensure that HP HARQ-ACK information is preferentially transmitted, and also ensure that the HP PUSCH carrying the LP UCI is transmitted at a same priority.

Manner 3: The first rule includes at least one of the following:
A transmit power allocation order of the fifth channel and/or a transmit power allocation order of the sixth channel are/is higher than a transmit power allocation order of the HP PUSCH, and are/is lower than a transmit power allocation order of the HP PUSCH carrying the HP CSI; and a transmit power allocation order of the fourth channel and/or a transmit power allocation order of the seventh channel are/is the same as a transmit power allocation order of the HP PUSCH carrying the HP HARQ-ACK, or a transmit power allocation order of the eighth channel is the same as the transmit power allocation order of the HP PUSCH carrying the HP CSI.

Optionally, the transmit power allocation order of the fifth channel is higher than the transmit power allocation order of the sixth channel, the transmit power allocation order of the fifth channel is lower than the transmit power allocation order of the HP PUSCH carrying the HP CSI, and the transmit power allocation order of the sixth channel is higher than the transmit power allocation order of the HP PUSCH.

Manner 4: The first rule includes at least one of the following:
A transmit power allocation order of the fifth channel and/or a transmit power allocation order of the sixth channel are/is higher than a transmit power allocation order of the HP PUSCH, and are/is lower than a transmit power allocation order of the HP PUSCH carrying the HP CSI; and a transmit power allocation order of the fourth channel and/or a transmit power allocation order of the seventh channel are/is the same as a transmit power allocation order of the HP PUSCH carrying the HP HARQ-ACK, or a transmit power allocation order of the eighth channel is higher than the transmit power allocation order of the HP PUSCH, and is lower than the transmit power allocation order of the HP PUSCH carrying the HP CSI.

Optionally, the transmit power allocation order of the HP PUSCH carrying the HP CSI is higher than the transmit power allocation order of the eighth channel, the transmit power allocation order of the eighth channel is higher than the transmit power allocation order of the fifth channel, the transmit power allocation order of the fifth channel is higher than the transmit power allocation order of the sixth channel, and the transmit power allocation order of the sixth channel is higher than the transmit power allocation order of the HP PUSCH.

In this implementation, the transmit power allocation order is defined for the first channel. This may ensure transmission of the LP UCI. In addition, this ensures that LP HARQ-ACK information can be transmitted prior to LP CSI information, and ensures that the high priority information is preferentially transmitted.

Manner 5: The first rule includes at least one of the following:
A transmit power allocation order of the fifth channel and/or a transmit power allocation order of the sixth channel are/is lower than a transmit power allocation order of the HP PUSCH, and are/is higher than a transmit power allocation order of the LP PUCCH carrying the LP HARQ-ACK and/or the LP SR, a transmit power allocation order of the fourth channel and/or a transmit power allocation order of the seventh channel are/is the same as a transmit power allocation order of the HP PUSCH carrying the HP HARQ-ACK, or a transmit power allocation order of the eighth channel is the same as a transmit power allocation order of the HP PUSCH carrying the HP CSI.

Optionally, the transmit power allocation order of the fifth channel is higher than the transmit power allocation order of the sixth channel, the transmit power allocation order of the fifth channel is lower than the transmit power allocation order of the HP PUSCH, and the transmit power allocation order of the sixth channel is higher than the transmit power allocation order of the LP PUCCH carrying the LP HARQ-ACK and/or the LP SR.

Manner 6: The first rule includes at least one of the following:
A transmit power allocation order of the fifth channel and/or a transmit power allocation order of the sixth channel are/is lower than a transmit power allocation order of the HP PUSCH, and are/is higher than a transmit power allocation order of the LP PUCCH carrying the LP HARQ-ACK and/or the LP SR, a transmit power allocation order of the fourth channel and/or a transmit power allocation order of the seventh channel are/is the same as a transmit power allocation order of the HP PUSCH carrying the HP HARQ-ACK, or a transmit power allocation order of the eighth channel is lower than the transmit power allocation order of the HP PUSCH, and is higher than the transmit power allocation order of the LP PUCCH carrying the LP HARQ-ACK and/or the LP SR.

Optionally, the transmit power allocation order of the HP PUSCH is higher than the transmit power allocation order of the eighth channel, the transmit power allocation order of the eighth channel is higher than the transmit power allocation order of the fifth channel, the transmit power allocation order of the fifth channel is higher than the transmit power allocation order of the sixth channel, and the transmit power allocation order of the sixth channel is higher than a transmit power allocation order of the LP PUCCH carrying the LP HARQ-ACK and/or the LP SR and the LP CSI.

In this implementation, the transmit power allocation order is defined for the first channel. Because a fuzzy size of the LP UCI may cause performance of the HP PUSCH to be low, lowering a transmit power allocation order of the LP UCI can ensure that the performance of the HP PUSCH is not affected. In addition, this ensures that LP HARQ-ACK information can be transmitted prior to LP CSI information, and ensures that the high priority information is preferentially transmitted.

Manner 7: The first rule includes at least one of the following:
A transmit power allocation order of the fifth channel is the same as a transmit power allocation order of the HP PUSCH carrying the HP HARQ-ACK, a transmit power allocation order of the sixth channel is the same as a transmit power allocation order of the HP PUSCH, a transmit power allocation order of the fourth channel and/or a transmit power allocation order of the seventh channel are/is the same as the transmit power allocation order of the HP PUSCH carrying the HP HARQ-ACK, or a transmit power allocation order of the eighth channel is the same as a transmit power allocation order of the HP PUSCH carrying the HP CSI.

In this implementation, the transmit power allocation order is defined for the first channel. This ensures that HARQ-ACK information and the high priority information can be preferentially transmitted.

Manner 8: The first rule includes at least one of the following:
A transmit power allocation order of the fifth channel is the same as a transmit power allocation order of the HP PUSCH carrying the HP HARQ-ACK, a transmit power allocation order of the sixth channel is the same as a transmit power allocation order of the HP PUSCH, a transmit power allocation order of the fourth channel and/or a transmit power allocation order of the seventh channel are/is the same as the transmit power allocation order of the HP PUSCH carrying the HP HARQ-ACK, or a transmit power allocation order of the eighth channel is the same as the transmit power allocation order of the HP PUSCH.

In this implementation, the transmit power allocation order is defined for the first channel. This ensures that HARQ-ACK information and the high priority information can be preferentially transmitted.

Manner 9: The first rule includes at least one of the following:
A transmit power allocation order of the fifth channel is the same as a transmit power allocation order of the HP PUSCH carrying the HP HARQ-ACK, a transmit power allocation order of the sixth channel is the same as a transmit power allocation order of the HP PUSCH carrying the HP CSI, a transmit power allocation order of the fourth channel and/or a transmit power allocation order of the seventh channel are/is the same as the transmit power allocation order of the HP PUSCH carrying the HP HARQ-ACK, or a transmit power allocation order of the eighth channel is the same as the transmit power allocation order of the HP PUSCH carrying the HP CSI.

In this implementation, the transmit power allocation order is defined for the first channel. This ensures that HARQ-ACK information and the high priority information can be preferentially transmitted, and ensures that LP CSI information can be transmitted prior to the HP PUSCH, to protect measurement reporting and improve reliability of transmission of the uplink channels.

Manner 10: The first rule includes at least one of the following:
A transmit power allocation order of the fifth channel is lower than a transmit power allocation order of the HP PUSCH carrying the HP HARQ-ACK, and is higher than a transmit power allocation order of the HP PUSCH carrying the HP CSI, a transmit power allocation order of the sixth channel is the same as a transmit power allocation order of the HP PUSCH, a transmit power allocation order of the fourth channel and/or a transmit power allocation order of the seventh channel are/is the same as the transmit power allocation order of the HP PUSCH carrying the HP HARQ-ACK, or a transmit power allocation order of the eighth channel is the same as the transmit power allocation order of the HP PUSCH carrying the HP CSI.

Manner 11: The first rule includes at least one of the following:
A transmit power allocation order of the fifth channel is lower than a transmit power allocation order of the HP PUSCH carrying the HP HARQ-ACK, and is higher than a transmit power allocation order of the HP PUSCH carrying the HP CSI, a transmit power allocation order of the sixth channel is the same as a transmit power allocation order of the HP PUSCH, a transmit power allocation order of the fourth channel and/or a transmit power allocation order of the seventh channel are/is the same as the transmit power allocation order of the HP PUSCH carrying the HP HARQ-ACK, or a transmit power allocation order of the eighth channel is the same as the transmit power allocation order of the HP PUSCH.

In this implementation, the transmit power allocation order is defined for the first channel. This ensures that HARQ-ACK information and the high priority information can be preferentially transmitted.

Manner 12: The first rule includes at least one of the following:
A transmit power allocation order of the fifth channel is lower than a power allocation order of the HP PUSCH carrying the HP HARQ-ACK, and is higher than a transmit power allocation order of the HP PUSCH carrying the HP CSI, a transmit power allocation order of the sixth channel is the same as the transmit power allocation order of the HP PUSCH carrying the HP CSI, a transmit power allocation order of the fourth channel and/or a transmit power allocation order of the seventh channel are/is the same as the transmit power allocation order of the HP PUSCH carrying the HP HARQ-ACK, and a transmit power allocation order of the eighth channel is the same as the transmit power allocation order of the HP PUSCH carrying the HP CSI.

In this implementation, the transmit power allocation order is defined for the first channel. This ensures that HARQ-ACK information and the high priority information can be preferentially transmitted, and ensures that LP CSI information can be transmitted prior to the HP PUSCH, to protect measurement reporting and improve transmission reliability of a system.

Manner 13: The first rule includes at least one of the following:
A transmit power allocation order of the first channel is lower than a transmit power allocation order of the second channel, and is higher than a transmit power allocation order of the third channel, and transmit power allocation orders of at least two of the fourth channel, the fifth channel, the sixth channel, the seventh channel, and the eighth channel are the same.

In this implementation, the transmit power allocation order is defined for the first channel. A definition rule is convenient and concise, and different reliability of different priorities is considered, to ensure that the HP HARQ-ACK is preferentially transmitted.

Manner 14: The first rule includes at least one of the following:
A transmit power allocation order of the first channel is lower than a transmit power allocation order of the second channel, and is higher than a transmit power allocation order of the third channel, and transmit power allocation orders of at least two of the fifth channel, the sixth channel, the seventh channel, and the eighth channel are the same, and are lower than a transmit power allocation order of the fourth channel.

In this implementation, the transmit power allocation order is defined for the first channel. A definition rule is convenient and concise, and different reliability of different priorities is considered, to ensure that the HP HARQ-ACK is preferentially transmitted.

Manner 15: The first rule includes at least one of the following:
A transmit power allocation order of the first channel is lower than a transmit power allocation order of the second channel, and is higher than a transmit power allocation order of the third channel, a transmit power allocation order of the fourth channel is the same as a transmit power allocation order of the seventh channel, and transmit power allocation orders of at least two of the fifth channel, the sixth channel, and the eighth channel are the same, where the transmit power allocation order of the fourth channel and/or the transmit power allocation order of the seventh channel are/is higher than a transmit power allocation order of at least one of the fifth channel, the sixth channel, and the eighth channel.

In this implementation, the transmit power allocation order is defined for the first channel. A definition rule is convenient and concise, and different reliability of different priorities is considered, to ensure that the HP HARQ-ACK is preferentially transmitted.

Manner 16: The first rule, that is, ranking of transmit power allocation orders, is specifically as follows:
A transmit power allocation order of the first channel is lower than a transmit power allocation order of the second channel, and is higher than a transmit power allocation order of the third channel, a transmit power allocation order of the fourth channel is the same as a transmit power allocation order of the seventh channel, a transmit power allocation order of the fifth channel is the same as a transmit power allocation order of the sixth channel, and a transmit power allocation order of the eighth channel is lower than the transmit power allocation order of the fourth channel and/or the transmit power allocation order of the seventh channel, and is higher than the transmit power allocation order of the fifth channel and/or the transmit power allocation order of the sixth channel.

In this implementation, the transmit power allocation order is defined for the first channel. A definition rule is convenient and concise, and different reliability of different priorities is considered, to ensure that the HP UCI is preferentially transmitted.

In summary, according to the technical solutions of this application, a rule (a rule of multiplexing of a cross-priority uplink channel) of the power allocation order of the first channel is defined, to ensure sending of the high priority uplink control information within the maximum transmit power allowed by the terminal device, thereby improving transmission reliability of a system.

It should be noted that, in this implementation, interaction between the terminal device and the network device is used as an example, to describe in detail a case in which the terminal device determines a plurality of uplink channels, and sends one or more of the plurality of uplink channels according to the first rule. A transmit power allocation order is defined for a hybrid priority channel. This ensures that the HP PUSCH and the HP PUSCH carrying the LP UCI have an identical priority, and improves reliability of channel transmission.

Optionally, the technical solutions of this application are also applicable to a sidelink SL scenario, or are applicable to resource configuration and scheduling between a source base station and a target base station. The SL scenario includes vehicle-to-everything V2X communication. V2X further includes vehicle-to-vehicle V2V communication, vehicle-to-pedestrian V2P communication, vehicle-to-infrastructure V2I communication, vehicle-to-network V2N communication, and the like. Except the V2N communication, the V2X communication relates to sidelink communication through a directly connected communication interface, for example, a PC5 interface, between terminal devices.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

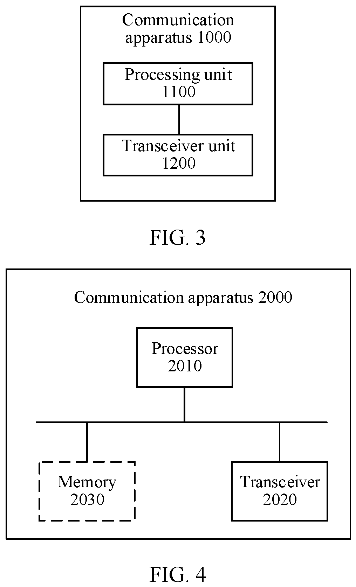

The foregoing describes in detail embodiments on a communication method side in this application with reference to FIG. 1 and FIG. 2. The following describes in detail embodiments on a communication apparatus side in this application with reference to FIG. 3 and FIG. 4. It should be understood that, descriptions of the apparatus embodiments correspond to descriptions of the method embodiments. Therefore, for a part that is not described in detail, refer to the foregoing method embodiments.

FIG. 3 is a schematic block diagram of a communication apparatus according to an embodiment of this application. As shown in FIG. 3, the communication apparatus 1000 may include a processing unit 1100 and a transceiver unit 1200.

Optionally, the communication apparatus 1000 may correspond to the terminal device in the foregoing method embodiments, for example, may be a terminal device, or a component (such as a circuit, a chip, or a chip system) disposed in the terminal device.

It should be understood that, the communication apparatus 1000 may correspond to the terminal device in the method 200 according to embodiments of this application, and the communication apparatus 1000 may include a unit configured to perform the method performed by the terminal device in the method 200 in FIG. 2. In addition, the units in the communication apparatus 1000 and the foregoing other operations and/or functions are separately intended to implement corresponding procedures of the method 200 in FIG. 2.

For example, the processing unit 1100 is configured to determine, by a terminal device, m uplink channels, where the m uplink channels include a first channel, the first channel includes high priority information and low priority information, the m uplink channels overlap in time domain, a sum of powers of the m uplink channels is greater than a maximum transmit power of a terminal device, and m is an integer greater than 1.

The transceiver unit 1200 is configured to send, by a terminal device, n uplink channels according to a first rule, where the n uplink channels belong to the m uplink channels, the first rule is a rule of a transmit power allocation order of an uplink channel, and n is a positive integer less than or equal to m.

It should further be understood that, when the communication apparatus 1000 is a terminal device, the transceiver unit 1200 in the communication apparatus 1000 may be implemented by a transceiver, for example, may correspond to a transceiver 2020 in a communication apparatus 2000 shown in FIG. 4, and the processing unit 1100 in the communication apparatus 1000 may be implemented by at least one processor, for example, may correspond to a processor 2010 in the communication apparatus 2000 shown in FIG. 4.

It should be further understood that, when the communication apparatus 1000 is a chip or a chip system disposed in a terminal device, the transceiver unit 1200 in the communication apparatus 1000 may be implemented by an input/output interface, a circuit, or the like, and the processing unit 1100 in the communication apparatus 1000 may be implemented by a processor, a microprocessor, an integrated circuit, or the like integrated on the chip or the chip system.

Optionally, the communication apparatus 1000 may correspond to the network device in the foregoing method embodiments, for example, may be a network device, or a component (such as a circuit, a chip, or a chip system) disposed in the network device.

It should be understood that, the communication apparatus 1000 may correspond to the network device in the method 200 according to embodiments of this application, and the communication apparatus 1000 may include a unit configured to perform the method performed by the network device in the method 200 in FIG. 2. In addition, the units in the communication apparatus 1000 and the foregoing other operations and/or functions are separately intended to implement corresponding procedures of the method 200 in FIG. 2.

For example, the transceiver unit 1200 is configured to receive, by a network device, n uplink channels, where the n uplink channels belong to m uplink channels, the m uplink channels include a first channel, the first channel includes high priority information and low priority information, the m uplink channels overlap in time domain, a sum of powers of the m uplink channels is greater than a maximum transmit power of a terminal device, the n uplink channels are determined according to a first rule, the first rule is a rule of a transmit power allocation order of an uplink channel, m is an integer greater than 1, and n is a positive integer less than or equal to m.

It should further be understood that, when the communication apparatus 1000 is a network device, the transceiver unit 1200 in the communication apparatus 1000 may be implemented by a transceiver, for example, may correspond to a transceiver 2020 in a communication apparatus 2000 shown in FIG. 4, and the processing unit 1100 in the communication apparatus 1000 may be implemented by at least one processor, for example, may correspond to a processor 2010 in the communication apparatus 2000 shown in FIG. 4.

It should be further understood that, when the communication apparatus 1000 is a chip or a chip system disposed in a network device, the transceiver unit 1200 in the communication apparatus 1000 may be implemented by an input/output interface, a circuit, or the like, and the processing unit 1100 in the communication apparatus 1000 may be implemented by a processor, a microprocessor, an integrated circuit, or the like integrated on the chip or the chip system.

FIG. 4 is another schematic block diagram of a communication apparatus 2000 according to an embodiment of this application. As shown in FIG. 4, the communication apparatus 2000 includes a processor 2010, a transceiver 2020, and a memory 2030. The processor 2010, the transceiver 2020, and the memory 2030 communicate with each other via an internal connection path. The memory 2030 is configured to store instructions. The processor 2010 is configured to execute the instructions stored in the memory 2030, to control the transceiver 2020 to send and/or receive signals.

It should be understood that, the communication apparatus 2000 may correspond to the network device or the terminal device in the foregoing method embodiments, and may be configured to perform the steps and/or the procedures performed by the network device or the terminal device in the foregoing method embodiments. Optionally, the memory 2030 may include a read-only memory and a random access memory, and provide instructions and data to the processor. A part of the memory may further include a non-volatile random access memory. The memory 2030 may be an independent device, or may be integrated into the processor 2010. The processor 2010 may be configured to execute the instructions stored in the memory 2030. When the processor 2010 executes the instructions stored in the memory, the processor 2010 is configured to perform the steps and/or the procedures corresponding to the network device or the terminal device in the foregoing method embodiments.

In a possible implementation, the communication apparatus 2000 is the terminal device in the foregoing embodiments.

For example, the processor 2010 is configured to determine, by a terminal device, m uplink channels, where the m uplink channels include a first channel, the first channel includes high priority information and low priority information, the m uplink channels overlap in time domain, a sum of powers of the m uplink channels is greater than a maximum transmit power of a terminal device, and m is an integer greater than 1.

The transceiver 2020 is configured to send, by a terminal device, n uplink channels according to a first rule, where the n uplink channels belong to the m uplink channels, the first rule is a rule of a transmit power allocation order of an uplink channel, and n is a positive integer less than or equal to m.

In another possible implementation, the communication apparatus 2000 is the network device in the foregoing embodiments.

For example, the transceiver 2020 is configured to receive, by a network device, n uplink channels, where the n uplink channels belong to m uplink channels, the m uplink channels include a first channel, the first channel includes high priority information and low priority information, the m uplink channels overlap in time domain, a sum of powers of the m uplink channels is greater than a maximum transmit power of a terminal device, the n uplink channels are determined according to a first rule, the first rule is a rule of a transmit power allocation order of an uplink channel, m is an integer greater than 1, and n is a positive integer less than or equal to m.

The transceiver 2020 may include a transmitting machine and a receiving machine. The transceiver 2020 may further include an antenna, and there may be one or more antennas. The processor 2010, the memory 2030, and the transceiver 2020 may be components integrated on different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated on a same chip. This is not limited in this application.

Optionally, the communication apparatus 2000 is a component disposed in the terminal device, for example, a circuit, a chip, or a chip system.

Optionally, the communication apparatus 2000 is a component disposed in the network device, for example, a circuit, a chip, or a chip system.

Alternatively, the transceiver 2020 may be a communication interface, such as an input/output interface or a circuit. The transceiver 2020, the processor 2010, and the memory 2020 may be integrated into a same chip, for example, integrated into the baseband chip.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any conventional processor or the like.

It should be further understood that, the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and methods described in this specification includes but is not limited to these and any memory of another proper type.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may also be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

It should be understood that, foregoing embodiments may be independent solutions, or may be combined based on internal logic. These solutions fall within the protection scope of this application. The terminal device and/or the network device may perform some or all of the steps in embodiments. These steps or operations are merely examples. In this application, other operations or variants of various operations may be further performed. In addition, the steps may be performed in different sequences presented in embodiments, and not all operations in embodiments of this application may need to be performed.

It may be understood that, various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both an application running on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining m uplink channels, wherein the m uplink channels comprise a first channel, the first channel comprises high priority information and low priority information, the m uplink channels overlap in time domain, a sum of powers of the m uplink channels is greater than a maximum transmit power of a terminal device, and m is an integer greater than 1; and
sending n uplink channels according to a first rule, wherein the n uplink channels belong to the m uplink channels, the first rule is a rule of a transmit power allocation order of an uplink channel, and n is a positive integer less than or equal to m.

2. The method according to claim 1, wherein the m uplink channels further comprise at least one of a second channel and a third channel, the second channel comprises the high priority information but does not comprise the low priority information, and the third channel comprises the low priority information but does not comprise the high priority information.

3. The method according to either of claims 1 and 2, wherein the first channel comprises at least one of the following channels: a fourth channel, a fifth channel, a sixth channel, and a seventh channel, wherein
the fourth channel is at least one of the following information: an HP PUCCH carrying a high priority HP automatic repeat request-acknowledgement HARQ-ACK and a low priority LP HARQ-ACK, an HP PUCCH carrying an HP scheduling request SR and the LP HARQ-ACK, an HP PUCCH carrying the HP HARQ-ACK, the HP SR, and the LP HARQ-ACK, an HP PUCCH carrying the HP HARQ-ACK and an LP SR, an HP PUCCH carrying the HP SR and the LP SR, an HP PUCCH carrying the HP HARQ-ACK, the HP SR, and the LP SR, an HP PUCCH carrying the LP HARQ-ACK, the HP SR, and the LP SR, an HP PUCCH carrying the LP HARQ-ACK, the HP HARQ-ACK, and the LP SR, an HP PUCCH carrying the HP HARQ-ACK, the LP HARQ-ACK, the HP SR, and the LP SR, an HP physical uplink data channel PUSCH carrying the HP HARQ-ACK and the LP HARQ-ACK, an HP PUSCH carrying the HP HARQ-ACK, the LP HARQ-ACK, and an LP channel state information CSI part 1, an HP PUSCH carrying the HP HARQ-ACK, the LP HARQ-ACK, and an HP CSI part 1, an HP PUSCH carrying the HP HARQ-ACK and the LP CSI part 1, or an HP PUSCH carrying the HP HARQ-ACK, the LP CSI part 1, and an LP CSI part 2;
the fifth channel is at least one of the following information: an HP PUSCH carrying the LP HARQ-ACK, an HP PUSCH carrying the LP HARQ-ACK and the LP CSI part 1, or an HP PUSCH carrying the LP HARQ-ACK, the LP CSI part 1, and the LP CSI part 2;
the sixth channel is an HP PUSCH carrying the LP CSI part 1, or an HP PUSCH carrying the LP CSI part 1 and the LP CSI part 2; and
the seventh channel is at least one of the following information: a low priority physical uplink data channel LP PUSCH carrying the HP HARQ-ACK, an LP PUSCH carrying the HP HARQ-ACK and the LP HARQ-ACK, an LP PUSCH carrying the HP HARQ-ACK, the LP HARQ-ACK, and the LP CSI part 1, an LP PUSCH carrying the HP HARQ-ACK and the LP CSI part 1, or an LP PUSCH carrying the HP HARQ-ACK, the LP CSI part 1, and the LP CSI part 2.

4. The method according to any one of claims 1 to 3, wherein the first channel comprises an eighth channel, and the eighth channel is an HP PUSCH carrying HP CSI and the LP HARQ-ACK.

5. The method according to any one of claims 2 to 4, wherein
the second channel is at least one of the following information: an HP PUCCH carrying the HP HARQ-ACK and/or the HP SR, an HP PUSCH carrying the HP HARQ-ACK, a PUSCH carrying the HP HARQ-ACK and the HP CSI, an HP PUSCH carrying the HP CSI, or an HP PUSCH; and
the third channel is at least one of the following information: an LP PUCCH carrying the LP HARQ-ACK and/or the LP SR, an LP PUCCH carrying the LP HARQ-ACK and LP CSI, an LP PUCCH carrying the LP SR and the LP CSI, an LP PUCCH carrying the LP HARQ-ACK, the LP SR, and the LP CSI, an LP PUSCH carrying the LP HARQ-ACK, an LP PUSCH carrying the LP HARQ-ACK and the LP CSI, an LP PUCCH carrying the LP CSI, an LP PUSCH carrying the LP CSI, or an LP PUSCH.

6. The method according to claim 5, wherein
the first rule comprises: a transmit power allocation order of the fifth channel and/or a transmit power allocation order of the sixth channel are/is the same as a transmit power allocation order of the HP PUSCH.

7. The method according to claim 5, wherein
the first rule comprises: a transmit power allocation order of the fifth channel and/or a transmit power allocation order of the sixth channel are/is higher than a transmit power allocation order of the HP PUSCH.

8. The method according to claim 5, wherein
the first rule comprises: a transmit power allocation order of the fifth channel and/or a transmit power allocation order of the sixth channel are/is lower than a transmit power allocation order of the HP PUSCH.

9. The method according to claim 7 or 8, wherein the transmit power allocation order of the fifth channel is higher than the transmit power allocation order of the sixth channel.

10. The method according to any one of claims 6 to 9, wherein
the first rule further comprises: a transmit power allocation order of the fourth channel and/or a transmit power allocation order of the seventh channel are/is the same as a transmit power allocation order of the HP PUSCH carrying the HP HARQ-ACK.

11. The method according to any one of claims 6 to 10, wherein
the first rule further comprises: a transmit power allocation order of the eighth channel is the same as a transmit power allocation order of the HP PUSCH carrying the HP CSI.

12. The method according to any one of claims 6 to 10, wherein
the first rule further comprises: a transmit power allocation order of the eighth channel is the same as the transmit power allocation order of the fifth channel and/or the transmit power allocation order of the sixth channel.

13. The method according to any one of claims 2 to 5, wherein
the first rule comprises: a transmit power allocation order of the first channel is lower than a transmit power allocation order of the second channel, and is higher than a transmit power allocation order of the third channel.

14. The method according to claim 13, wherein transmit power allocation orders of at least two of the fourth channel, the fifth channel, the sixth channel, the seventh channel, and the eighth channel are the same.

15. The method according to claim 13, wherein transmit power allocation orders of at least two of the fifth channel, the sixth channel, the seventh channel, and the eighth channel are the same, and are lower than a transmit power allocation order of the fourth channel.

16. The method according to claim 13, wherein a transmit power allocation order of the fourth channel is the same as a transmit power allocation order of the seventh channel, and/or transmit power allocation orders of at least two of the fifth channel, the sixth channel, and the eighth channel are the same; and
the transmit power allocation order of the fourth channel and/or the transmit power allocation order of the seventh channel are/is higher than a transmit power allocation order of at least one of the fifth channel, the sixth channel, and the eighth channel.

17. The method according to claim 13, wherein a transmit power allocation order of the fourth channel is the same as a transmit power allocation order of the seventh channel, and/or a transmit power allocation order of the fifth channel is the same as a transmit power allocation order of the sixth channel, and/or a transmit power allocation order of the eighth channel is lower than the transmit power allocation order of the fourth channel and/or the transmit power allocation order of the seventh channel, and is higher than the transmit power allocation order of the fifth channel and/or the transmit power allocation order of the sixth channel.

18. A communication method, comprising:
receiving n uplink channels, wherein the n uplink channels belong to m uplink channels, the m uplink channels comprise a first channel, the first channel comprises high priority information and low priority information, the m uplink channels overlap in time domain, a sum of powers of the m uplink channels is greater than a maximum transmit power of a terminal device, the n uplink channels are determined according to a first rule, the first rule is a rule of a transmit power allocation order of an uplink channel, m is an integer greater than 1, and n is a positive integer less than or equal to m.

19. The method according to claim 18, wherein the m uplink channels further comprise at least one of a second channel and a third channel, the second channel comprises the high priority information but does not comprise the low priority information, and the third channel comprises the low priority information but does not comprise the high priority information.

20. The method according to either of claims 18 and 19, wherein the first channel comprises at least one of the following channels: a fourth channel, a fifth channel, a sixth channel, and a seventh channel, wherein
the fourth channel is at least one of the following information: an HP PUCCH carrying a high priority HP automatic repeat request-acknowledgement HARQ-ACK and a low priority LP HARQ-ACK, an HP PUCCH carrying an HP scheduling request SR and the LP HARQ-ACK, an HP PUCCH carrying the HP HARQ-ACK, the HP SR, and the LP HARQ-ACK, an HP PUCCH carrying the HP HARQ-ACK and an LP SR, an HP PUCCH carrying the HP SR and the LP SR, an HP PUCCH carrying the HP HARQ-ACK, the HP SR, and the LP SR, an HP PUCCH carrying the LP HARQ-ACK, the HP SR, and the LP SR, an HP PUCCH carrying the LP HARQ-ACK, the HP HARQ-ACK, and the LP SR, an HP PUCCH carrying the HP HARQ-ACK, the LP HARQ-ACK, the HP SR, and the LP SR, an HP physical uplink data channel PUSCH carrying the HP HARQ-ACK and the LP HARQ-ACK, an HP PUSCH carrying the HP HARQ-ACK, the LP HARQ-ACK, and an LP channel state information CSI part 1, an HP PUSCH carrying the HP HARQ-ACK, the LP HARQ-ACK, and an HP CSI part 1, an HP PUSCH carrying the HP HARQ-ACK and the LP CSI part 1, or an HP PUSCH carrying the HP HARQ-ACK, the LP CSI part 1, and an LP CSI part 2;
the fifth channel is at least one of the following information: an HP PUSCH carrying the LP HARQ-ACK, an HP PUSCH carrying the LP HARQ-ACK and the LP CSI part 1, or an HP PUSCH carrying the LP HARQ-ACK, the LP CSI part 1, and the LP CSI part 2;
the sixth channel is an HP PUSCH carrying the LP CSI part 1, or an HP PUSCH carrying the LP CSI part 1 and the LP CSI part 2; and
the seventh channel is at least one of the following information: a low priority physical uplink data channel LP PUSCH carrying the HP HARQ-ACK, an LP PUSCH carrying the HP HARQ-ACK and the LP HARQ-ACK, an LP PUSCH carrying the HP HARQ-ACK, the LP HARQ-ACK, and the LP CSI part 1, an LP PUSCH carrying the HP HARQ-ACK and the LP CSI part 1, or an LP PUSCH carrying the HP HARQ-ACK, the LP CSI part 1, and the LP CSI part 2.

21. The method according to any one of claims 18 to 20, wherein the first channel comprises an eighth channel, and the eighth channel is an HP PUSCH carrying HP CSI and the LP HARQ-ACK.

22. The method according to any one of claims 19 to 21, wherein
the second channel is at least one of the following information: an HP PUCCH carrying the HP HARQ-ACK and/or the HP SR, an HP PUSCH carrying the HP HARQ-ACK, a PUSCH carrying the HP HARQ-ACK and the HP CSI, an HP PUSCH carrying the HP CSI, or an HP PUSCH; and
the third channel is at least one of the following information: an LP PUCCH carrying the LP HARQ-ACK and/or the LP SR, an LP PUCCH carrying the LP HARQ-ACK and LP CSI, an LP PUCCH carrying the LP SR and the LP CSI, an LP PUCCH carrying the LP HARQ-ACK, the LP SR, and the LP CSI, an LP PUSCH carrying the LP HARQ-ACK, an LP PUSCH carrying the LP HARQ-ACK and the LP CSI, an LP PUCCH carrying the LP CSI, an LP PUSCH carrying the LP CSI, or an LP PUSCH.

23. The method according to claim 22, wherein
the first rule comprises: a transmit power allocation order of the fifth channel and/or a transmit power allocation order of the sixth channel are/is the same as a transmit power allocation order of the HP PUSCH.

24. The method according to claim 22, wherein
the first rule comprises: a transmit power allocation order of the fifth channel and/or a transmit power allocation order of the sixth channel are/is higher than a transmit power allocation order of the HP PUSCH.

25. The method according to claim 22, wherein
the first rule comprises: a transmit power allocation order of the fifth channel and/or a transmit power allocation order of the sixth channel are/is lower than a transmit power allocation order of the HP PUSCH.

26. The method according to claim 24 or 25, wherein the transmit power allocation order of the fifth channel is higher than the transmit power allocation order of the sixth channel.

27. The method according to either of claims 25 and 26, wherein
the first rule further comprises: a transmit power allocation order of the fourth channel and/or a transmit power allocation order of the seventh channel are/is the same as a transmit power allocation order of the HP PUSCH carrying the HP HARQ-ACK.

28. The method according to any one of claims 23 to 27, wherein
the first rule further comprises: a transmit power allocation order of the eighth channel is the same as a transmit power allocation order of the HP PUSCH carrying the HP CSI.

29. The method according to any one of claims 23 to 27, wherein
the first rule further comprises: a transmit power allocation order of the eighth channel is the same as the transmit power allocation order of the fifth channel and/or the transmit power allocation order of the sixth channel.

30. The method according to any one of claims 19 to 22, wherein
the first rule comprises: a transmit power allocation order of the first channel is lower than a transmit power allocation order of the second channel, and is higher than a transmit power allocation order of the third channel.

31. The method according to claim 30, wherein transmit power allocation orders of at least two of the fourth channel, the fifth channel, the sixth channel, the seventh channel, and the eighth channel are the same.

32. The method according to claim 30, wherein transmit power allocation orders of at least two of the fifth channel, the sixth channel, the seventh channel, and the eighth channel are the same, and are lower than a transmit power allocation order of the fourth channel.

33. The method according to claim 30, wherein a transmit power allocation order of the fourth channel is the same as a transmit power allocation order of the seventh channel, and/or transmit power allocation orders of at least two of the fifth channel, the sixth channel, and the eighth channel are the same; and
the transmit power allocation order of the fourth channel and/or the transmit power allocation order of the seventh channel are/is higher than a transmit power allocation order of at least one of the fifth channel, the sixth channel, and the eighth channel.

34. The method according to claim 30, wherein a transmit power allocation order of the fourth channel is the same as a transmit power allocation order of the seventh channel, and/or a transmit power allocation order of the fifth channel is the same as a transmit power allocation order of the sixth channel, and/or a transmit power allocation order of the eighth channel is lower than the transmit power allocation order of the fourth channel and/or the transmit power allocation order of the seventh channel, and is higher than the transmit power allocation order of the fifth channel and/or the transmit power allocation order of the sixth channel.

35. A communication apparatus, comprising a processing unit and a transceiver unit, wherein
the processing unit is configured to determine m uplink channels, wherein the m uplink channels comprise a first channel, the first channel comprises high priority information and low priority information, the m uplink channels overlap in time domain, a sum of powers of the m uplink channels is greater than a maximum transmit power of a terminal device, and m is an integer greater than 1; and
the transceiver unit is configured to send n uplink channels according to a first rule, wherein the n uplink channels belong to the m uplink channels, the first rule is a rule of a transmit power allocation order of an uplink channel, and n is a positive integer less than or equal to m.

36. The apparatus according to claim 35, wherein the m uplink channels further comprise at least one of a second channel and a third channel, the second channel comprises the high priority information but does not comprise the low priority information, and the third channel comprises the low priority information but does not comprise the high priority information.

37. The apparatus according to either of claims 35 and 36, wherein the first channel comprises at least one of the following channels: a fourth channel, a fifth channel, a sixth channel, and a seventh channel, wherein
the fourth channel is at least one of the following information: an HP PUCCH carrying a high priority HP automatic repeat request-acknowledgement HARQ-ACK and a low priority LP HARQ-ACK, an HP PUCCH carrying an HP scheduling request SR and the LP HARQ-ACK, an HP PUCCH carrying the HP HARQ-ACK, the HP SR, and the LP HARQ-ACK, an HP PUCCH carrying the HP HARQ-ACK and an LP SR, an HP PUCCH carrying the HP SR and the LP SR, an HP PUCCH carrying the HP HARQ-ACK, the HP SR, and the LP SR, an HP PUCCH carrying the LP HARQ-ACK, the HP SR, and the LP SR, an HP PUCCH carrying the LP HARQ-ACK, the HP HARQ-ACK, and the LP SR, an HP PUCCH carrying the HP HARQ-ACK, the LP HARQ-ACK, the HP SR, and the LP SR, an HP physical uplink data channel PUSCH carrying the HP HARQ-ACK and the LP HARQ-ACK, an HP PUSCH carrying the HP HARQ-ACK, the LP HARQ-ACK, and an LP channel state information CSI part 1, an HP PUSCH carrying the HP HARQ-ACK, the LP HARQ-ACK, and an HP CSI part 1, an HP PUSCH carrying the HP HARQ-ACK and the LP CSI part 1, or an HP PUSCH carrying the HP HARQ-ACK, the LP CSI part 1, and an LP CSI part 2;
the fifth channel is at least one of the following information: an HP PUSCH carrying the LP HARQ-ACK, an HP PUSCH carrying the LP HARQ-ACK and the LP CSI part 1, or an HP PUSCH carrying the LP HARQ-ACK, the LP CSI part 1, and the LP CSI part 2;
the sixth channel is an HP PUSCH carrying the LP CSI part 1, or an HP PUSCH carrying the LP CSI part 1 and the LP CSI part 2; and
the seventh channel is at least one of the following information: a low priority physical uplink data channel LP PUSCH carrying the HP HARQ-ACK, an LP PUSCH carrying the HP HARQ-ACK and the LP HARQ-ACK, an LP PUSCH carrying the HP HARQ-ACK, the LP HARQ-ACK, and the LP CSI part 1, an LP PUSCH carrying the HP HARQ-ACK and the LP CSI part 1, or an LP PUSCH carrying the HP HARQ-ACK, the LP CSI part 1, and the LP CSI part 2.

38. The apparatus according to any one of claims 35 to 37, wherein the first channel comprises an eighth channel, and the eighth channel is an HP PUSCH carrying HP CSI and the LP HARQ-ACK.

39. The apparatus according to any one of claims 36 to 38, wherein
the second channel is at least one of the following information: an HP PUCCH carrying the HP HARQ-ACK and/or the HP SR, an HP PUSCH carrying the HP HARQ-ACK, a PUSCH carrying the HP HARQ-ACK and the HP CSI, an HP PUSCH carrying the HP CSI, or an HP PUSCH; and
the third channel is at least one of the following information: an LP PUCCH carrying the LP HARQ-ACK and/or the LP SR, an LP PUCCH carrying the LP HARQ-ACK and LP CSI, an LP PUCCH carrying the LP SR and the LP CSI, an LP PUCCH carrying the LP HARQ-ACK, the LP SR, and the LP CSI, an LP PUSCH carrying the LP HARQ-ACK, an LP PUSCH carrying the LP HARQ-ACK and the LP CSI, an LP PUCCH carrying the LP CSI, an LP PUSCH carrying the LP CSI, or an LP PUSCH.

40. The apparatus according to claim 39, wherein
the first rule comprises: a transmit power allocation order of the fifth channel and/or a transmit power allocation order of the sixth channel are/is the same as a transmit power allocation order of the HP PUSCH.

41. The apparatus according to claim 39, wherein
the first rule comprises: a transmit power allocation order of the fifth channel and/or a transmit power allocation order of the sixth channel are/is higher than a transmit power allocation order of the HP PUSCH.

42. The apparatus according to claim 39, wherein
the first rule comprises: a transmit power allocation order of the fifth channel and/or a transmit power allocation order of the sixth channel are/is lower than a transmit power allocation order of the HP PUSCH.

43. The apparatus according to claim 41 or 42, wherein the transmit power allocation order of the fifth channel is higher than the transmit power allocation order of the sixth channel.

44. The apparatus according to any one of claims 40 to 43, wherein
the first rule further comprises: a transmit power allocation order of the fourth channel and/or a transmit power allocation order of the seventh channel are/is the same as a transmit power allocation order of the HP PUSCH carrying the HP HARQ-ACK.

45. The apparatus according to any one of claims 40 to 44, wherein
the first rule further comprises: a transmit power allocation order of the eighth channel is the same as a transmit power allocation order of the HP PUSCH carrying the HP CSI.

46. The apparatus according to any one of claims 40 to 44, wherein
the first rule further comprises: a transmit power allocation order of the eighth channel is the same as the transmit power allocation order of the fifth channel and/or the transmit power allocation order of the sixth channel.

47. The apparatus according to any one of claims 36 to 39, wherein
the first rule comprises: a transmit power allocation order of the first channel is lower than a transmit power allocation order of the second channel, and is higher than a transmit power allocation order of the third channel.

48. The apparatus according to claim 47, wherein transmit power allocation orders of at least two of the fourth channel, the fifth channel, the sixth channel, the seventh channel, and the eighth channel are the same.

49. The apparatus according to claim 47, wherein transmit power allocation orders of at least two of the fifth channel, the sixth channel, the seventh channel, and the eighth channel are the same, and are lower than a transmit power allocation order of the fourth channel.

50. The apparatus according to claim 47, wherein a transmit power allocation order of the fourth channel is the same as a transmit power allocation order of the seventh channel, and/or transmit power allocation orders of at least two of the fifth channel, the sixth channel, and the eighth channel are the same; and
the transmit power allocation order of the fourth channel and/or the transmit power allocation order of the seventh channel are/is higher than a transmit power allocation order of at least one of the fifth channel, the sixth channel, and the eighth channel.

51. The apparatus according to claim 47, wherein a transmit power allocation order of the fourth channel is the same as a transmit power allocation order of the seventh channel, and/or a transmit power allocation order of the fifth channel is the same as a transmit power allocation order of the sixth channel, and/or a transmit power allocation order of the eighth channel is lower than the transmit power allocation order of the fourth channel and/or the transmit power allocation order of the seventh channel, and is higher than the transmit power allocation order of the fifth channel and/or the transmit power allocation order of the sixth channel.

52. A communication apparatus, comprising a transceiver unit, wherein
the transceiver unit is configured to receive n uplink channels, wherein the n uplink channels belong to m uplink channels, the m uplink channels comprise a first channel, the first channel comprises high priority information and low priority information, the m uplink channels overlap in time domain, a sum of powers of the m uplink channels is greater than a maximum transmit power of a terminal device, the n uplink channels are determined according to a first rule, the first rule is a rule of a transmit power allocation order of an uplink channel, m is an integer greater than 1, and n is a positive integer less than or equal to m.

53. The apparatus according to claim 52, wherein the m uplink channels further comprise at least one of a second channel and a third channel, the second channel comprises the high priority information but does not comprise the low priority information, and the third channel comprises the low priority information but does not comprise the high priority information.

54. The apparatus according to either of claims 52 and 53, wherein the first channel comprises at least one of the following channels: a fourth channel, a fifth channel, a sixth channel, and a seventh channel, wherein
the fourth channel is at least one of the following information: an HP PUCCH carrying a high priority HP automatic repeat request-acknowledgement HARQ-ACK and a low priority LP HARQ-ACK, an HP PUCCH carrying an HP scheduling request SR and the LP HARQ-ACK, an HP PUCCH carrying the HP HARQ-ACK, the HP SR, and the LP HARQ-ACK, an HP PUCCH carrying the HP HARQ-ACK and an LP SR, an HP PUCCH carrying the HP SR and the LP SR, an HP PUCCH carrying the HP HARQ-ACK, the HP SR, and the LP SR, an HP PUCCH carrying the LP HARQ-ACK, the HP SR, and the LP SR, an HP PUCCH carrying the LP HARQ-ACK, the HP HARQ-ACK, and the LP SR, an HP PUCCH carrying the HP HARQ-ACK, the LP HARQ-ACK, the HP SR, and the LP SR, an HP physical uplink data channel PUSCH carrying the HP HARQ-ACK and the LP HARQ-ACK, an HP PUSCH carrying the HP HARQ-ACK, the LP HARQ-ACK, and an LP channel state information CSI part 1, an HP PUSCH carrying the HP HARQ-ACK, the LP HARQ-ACK, and an HP CSI part 1, an HP PUSCH carrying the HP HARQ-ACK and the LP CSI part 1, or an HP PUSCH carrying the HP HARQ-ACK, the LP CSI part 1, and an LP CSI part 2;
the fifth channel is at least one of the following information: an HP PUSCH carrying the LP HARQ-ACK, an HP PUSCH carrying the LP HARQ-ACK and the LP CSI part 1, or an HP PUSCH carrying the LP HARQ-ACK, the LP CSI part 1, and the LP CSI part 2;
the sixth channel is an HP PUSCH carrying the LP CSI part 1, or an HP PUSCH carrying the LP CSI part 1 and the LP CSI part 2; and
the seventh channel is at least one of the following information: a low priority physical uplink data channel LP PUSCH carrying the HP HARQ-ACK, an LP PUSCH carrying the HP HARQ-ACK and the LP HARQ-ACK, an LP PUSCH carrying the HP HARQ-ACK, the LP HARQ-ACK, and the LP CSI part 1, an LP PUSCH carrying the HP HARQ-ACK and the LP CSI part 1, or an LP PUSCH carrying the HP HARQ-ACK, the LP CSI part 1, and the LP CSI part 2.

55. The apparatus according to any one of claims 52 to 54, wherein the first channel comprises an eighth channel, and the eighth channel is an HP PUSCH carrying HP CSI and the LP HARQ-ACK.

56. The apparatus according to any one of claims 53 to 55, wherein
the second channel is at least one of the following information: an HP PUCCH carrying the HP HARQ-ACK and/or the HP SR, an HP PUSCH carrying the HP HARQ-ACK, a PUSCH carrying the HP HARQ-ACK and the HP CSI, an HP PUSCH carrying the HP CSI, or an HP PUSCH; and
the third channel is at least one of the following information: an LP PUCCH carrying the LP HARQ-ACK and/or the LP SR, an LP PUCCH carrying the LP HARQ-ACK and LP CSI, an LP PUCCH carrying the LP SR and the LP CSI, an LP PUCCH carrying the LP HARQ-ACK, the LP SR, and the LP CSI, an LP PUSCH carrying the LP HARQ-ACK, an LP PUSCH carrying the LP HARQ-ACK and the LP CSI, an LP PUCCH carrying the LP CSI, an LP PUSCH carrying the LP CSI, or an LP PUSCH.

57. The apparatus according to claim 56, wherein
the first rule comprises: a transmit power allocation order of the fifth channel and/or a transmit power allocation order of the sixth channel are/is the same as a transmit power allocation order of the HP PUSCH.

58. The apparatus according to claim 56, wherein
the first rule comprises: a transmit power allocation order of the fifth channel and/or a transmit power allocation order of the sixth channel are/is higher than a transmit power allocation order of the HP PUSCH.

59. The apparatus according to claim 56, wherein
the first rule comprises: a transmit power allocation order of the fifth channel and/or a transmit power allocation order of the sixth channel are/is lower than a transmit power allocation order of the HP PUSCH.

60. The apparatus according to claim 58 or 59, wherein the transmit power allocation order of the fifth channel is higher than the transmit power allocation order of the sixth channel.

61. The apparatus according to either of claims 59 and 60, wherein
the first rule further comprises: a transmit power allocation order of the fourth channel and/or a transmit power allocation order of the seventh channel are/is the same as a transmit power allocation order of the HP PUSCH carrying the HP HARQ-ACK.

62. The apparatus according to any one of claims 57 to 61, wherein
the first rule further comprises: a transmit power allocation order of the eighth channel is the same as a transmit power allocation order of the HP PUSCH carrying the HP CSI.

63. The apparatus according to any one of claims 57 to 61, wherein
the first rule further comprises: a transmit power allocation order of the eighth channel is the same as the transmit power allocation order of the fifth channel and/or the transmit power allocation order of the sixth channel.

64. The apparatus according to any one of claims 53 to 57, wherein
the first rule comprises: a transmit power allocation order of the first channel is lower than a transmit power allocation order of the second channel, and is higher than a transmit power allocation order of the third channel.

65. The apparatus according to claim 64, wherein transmit power allocation orders of at least two of the fourth channel, the fifth channel, the sixth channel, the seventh channel, and the eighth channel are the same.

66. The apparatus according to claim 64, wherein transmit power allocation orders of at least two of the fifth channel, the sixth channel, the seventh channel, and the eighth channel are the same, and are lower than a transmit power allocation order of the fourth channel.

67. The apparatus according to claim 64, wherein a transmit power allocation order of the fourth channel is the same as a transmit power allocation order of the seventh channel, and/or transmit power allocation orders of at least two of the fifth channel, the sixth channel, and the eighth channel are the same; and
the transmit power allocation order of the fourth channel and/or the transmit power allocation order of the seventh channel are/is higher than a transmit power allocation order of at least one of the fifth channel, the sixth channel, and the eighth channel.

68. The apparatus according to claim 64, wherein a transmit power allocation order of the fourth channel is the same as a transmit power allocation order of the seventh channel, and/or a transmit power allocation order of the fifth channel is the same as a transmit power allocation order of the sixth channel, and/or a transmit power allocation order of the eighth channel is lower than the transmit power allocation order of the fourth channel and/or the transmit power allocation order of the seventh channel, and is higher than the transmit power allocation order of the fifth channel and/or the transmit power allocation order of the sixth channel.

69. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 17 through a logic circuit or by executing code instructions, or the processor is configured to implement the method according to any one of claims 18 to 34 through a logic circuit or by executing code instructions.

70. A computer-readable storage medium, wherein the storage medium stores a computer program or instructions; and when the computer program or the instructions are executed by a communication apparatus, the method according to any one of claims 1 to 17 is implemented, or the method according to any one of claims 18 to 34 is implemented.

71. A computer program, wherein when the computer program is executed by a communication apparatus, the method according to any one of claims 1 to 17 is implemented, or the method according to any one of claims 18 to 34 is implemented.

72. A chip, comprising at least one processor, wherein the at least one processor is coupled to a memory, the memory is configured to store a computer program, and the processor is configured to invoke the computer program from the memory and run the computer program, to enable a communication apparatus in which a chip system is mounted to perform the method according to any one of claims 1 to 17, or to enable a communication apparatus in which a chip system is mounted to perform the method according to any one of claims 18 to 34.

73. A computer program product, comprising computer program code, wherein when the computer program code is run, the method according to any one of claims 1 to 17 is enabled to be performed, or the method according to any one of claims 18 to 34 is enabled to be performed.

74. A communication system, comprising at least one communication apparatus according to claim 35 and at least one communication apparatus according to claim 52.
